(19) Europäisches Patentamt

European Patent Office

Office européen des brevets

(11) EP 0 652 985 B1

(12) **FASCICULE DE BREVET EUROPEEN**

(45) Date de publication et mention de la délivrance du brevet:
**02.04.1997 Bulletin 1997/14**

(21) Numéro de dépôt: **93916030.5**

(22) Date de dépôt: **22.07.1993**

(51) Int Cl.6: **D02G 3/12**, B01J 35/06, B01J 23/40, C01B 21/26, C01B 21/38

(86) Numéro de dépôt international:
**PCT/FR93/00752**

**WO 94/03665 (17.02.1994 Gazette 1994/05)**

(54) **FILS COMPRENANT UN ELEMENT HELICOIDAL, LEURS ASSEMBLAGES ET L'UTILISATION DESDITS ASSEMBLAGES COMME CATALYSEUR ET/OU POUR RECUPERER DES METAUX PRECIEUX**

FÄDEN AUS EINEM SPIRALFÖRMIGEN ELEMENT, DEREN ANORDNUNG UND VERWENDUNG DIESER ANORDNUNG ALS KATALYSATOR BZW. ZUR ZURÜCKGEWINNUNG VON EDELMETALLEN

WIRES INCORPORATING A HELICAL COMPONENT, ASSEMBLIES THEREOF, AND USE OF SAID ASSEMBLIES AS CATALYST AND/OR TO RECOVER PRECIOUS METALS

(84) Etats contractants désignés:
**AT BE CH DE DK ES FR GB GR IE IT LI LU MC NL PT SE**

(30) Priorité: **31.07.1992 FR 9209578**

(43) Date de publication de la demande:
**17.05.1995 Bulletin 1995/20**

(73) Titulaire: **ENGELHARD-CLAL SAS Paris (FR)**

(72) Inventeurs:
- **GUERLET, Jean-Paul F-75011 Paris (FR)**
- **LAMBERT, Claude F-95470 Saint-Witz (FR)**

(74) Mandataire: **Portal, Gérard Cabinet Beau de Loménie 158, rue de l'Université 75340 Paris Cédex 07 (FR)**

(56) Documents cités:
EP-A- 0 275 681          EP-A- 0 364 153
FR-A- 2 074 921          FR-A- 2 433 975
FR-A- 2 438 114          FR-A- 2 467 629

- PATENT ABSTRACTS OF JAPAN vol. 012, no. 011 (C-468)13 Janvier 1988 & JP,A,62 168 548 (CATALER KOGYO) 24 Juillet 1987
- DATABASE WPI Section Ch, Week 8814, Derwent Publications Ltd., London, GB; Class F02, AN 88-093966 & JP,A,63 042 933 (NIPPON MINING ET AL.) 24 Février 1988

## Description

La présente invention concerne de nouveaux fils contenant au moins un élément sous forme d'enroulement hélicoïdal, leurs assemblages notamment sous forme de tissus, tricots ou feutres et l'utilisation de ces assemblages comme catalyseur et/ou pour récupérer les métaux précieux.

Le procédé industriel de préparation de l'acide nitrique comporte comme étape essentielle l'oxydation de l'ammoniac en oxyde nitrique. Cette réaction est menée industriellement en faisant passer un mélange d'air et d'ammoniac sur un catalyseur métallique constitué généralement de platine ou d'un alliage de platine. Les conditions précises de réaction varient peu d'une installation à l'autre : le mélange de 10% d'ammoniac et de 90% d'air en volumes est préchauffé à une température de 180 à 250°C avant passage à travers le catalyseur. La réaction principale :

$$4 \, NH_3 + 5 \, O_2 \rightarrow 4 \, NO + 6 \, H_2O$$

se produit pendant le temps de contact avec le catalyseur, avec un rendement pouvant atteindre 96%. Cette réaction exothermique élève la température des gaz et maintient le catalyseur à 850-900°C. La composition des gaz est telle qu'il reste un excès d'oxygène après réaction ; dans la plage de températures atteintes, cet oxygène forme avec le platine un oxyde volatil, ce qui produit une perte de matière des toiles catalytiques. Ces pertes de platine sont variables selon les conditions de marche des installations et sont de l'ordre de 50 à 400 mg de platine par tonne d'acide nitrique produit.

Le catalyseur métallique est généralement mis en oeuvre sous la forme de toiles obtenues par tissage de fils linéaires. De nombreuses installations industrielles, ou brûleurs, utilisent ainsi des alliages de platine et de rhodium tréfilés en fils de 60 ou 76 $\mu$m de diamètre, puis tissés à raison de 32 fils/cm dans le sens de la chaîne et dans le sens de la trame, pour obtenir un tissu comprenant 1024 mailles/cm$^2$. Un lit catalytique est constitué de 3 à 40 couches ou toiles superposées, ce nombre dépendant essentiellement de la pression de fonctionnement et du débit massique des gaz ramené à l'unité de surface du lit catalytique. Le diamètre des toiles catalytiques atteint 5 m dans certains brûleurs.

Le platine volatilisé peut être partiellement capté au moyen de toiles d'alliage de palladium placées immédiatement sous les couches de toiles de platine. Ces toiles d'alliages de palladium sont des produits tissés, réalisés de la même façon que les toiles catalytiques.

Les mêmes toiles catalytiques sont également employées pour la synthèse de l'acide cyanhydrique par le procédé Andrussow. La réaction globale est :

$$NH_3 + CH_4 + 1,5 \, O_2 \rightarrow HCN + 3 \, H_2O$$

Cette réaction exothermique élève la température des gaz à 1 100°C. Les conditions opératoires sont telles qu'il n'y a pas excès d'oxygène et qu'il ne peut se former d'oxyde de platine ; le niveau des pertes de platine est dans ce cas très faible.

La forme de mise en oeuvre des catalyseurs en alliages de platine est restée à ce jour pratiquement identique à celle qui a été mise au point lors du développement de ce procédé au début du 20$^{ème}$ siècle. Certains perfectionnements de la structure des catalyseurs ont été proposés, mais ils n'ont pas donné lieu à une exploitation industrielle durable.

Le brevet français 2 074 921 décrit le remplacement d'environ 1/3 à 2/3 des toiles de métal précieux par une structure foraminée en métal non précieux résistant à la corrosion et telle que la chute de pression soit inchangée. Cette structure foraminée peut être réalisée sous la forme d'un tampon de métal constitué de fils orientés au hasard.

Le brevet européen 0 275 681 décrit un lit catalytique comprenant une couche foraminée de fibres d'un métal du groupe du platine ou d'un alliage en contenant et au moins une couche de matériau céramique foraminé ayant un revêtement d'au moins un des métaux du groupe du platine.

Le brevet français 2 467 629 décrit un lit catalytique qui comprend un assemblage ou une agglomération de fibres d'un métal ou d'un alliage du groupe du platine.

Il est remarquable de constater que les exemples décrits dans ces brevets présentent le point commun de nécessiter l'usage permanent d'une ou plusieurs toiles de platine de l'art antérieur auxquelles des structures nouvelles sont ajoutées ; les structures nouvelles qui sont décrites dans ces brevets ne possèdent pas une cohésion et des propriétés mécaniques suffisantes pour être autoporteuses. Les procédés décrits permettent de diminuer le nombre de toiles de l'art antérieur mises en oeuvre, sans pouvoir les remplacer intégralement.

Le brevet européen 0 364 153 décrit l'utilisation d'un tricot obtenu par un procédé particulier où le fil métallique est associé à un fil d'origine textile, ce dernier apportant principalement un effet de lubrification ; celle-ci est rendue nécessaire par les frottements intenses exercés sur le fil par les crochets de machine à tricoter. La préparation de tricots par ce procédé présente des avantages économiques, mais aussi des difficultés pour obtenir des tricots suffisamment denses et dont les mailles soient aussi petites que celles des toiles de l'art antérieur. La largeur maximale des bandes obtenues est seulement de 457 mm, ce qui exige la soudure de nombreuses bandes parallèles pour obtenir des pièces allant jusqu'à 5 m de diamètre. Malgré ces inconvénients, la fabrication de tricots selon ce procédé est réalisée industriellement.

Les procédés classiques de fabrication de toiles, tissus ou tricots métalliques utilisent des fils simples ou linéaires. Ces procédés ont des limitations technologiques, rencontrées par exemple à cause des propriétés mécaniques insuffisantes de certains métaux dont les fils cassent trop souvent en cours de fabrication. Ils ont également des limitations de principe, telles que par exemple l'impossibilité de choisir de façon indépendante la masse par unité de surface, le diamètre des fils et le nombre de mailles par unité de surface.

La présente invention permet de s'affranchir de ces inconvénients en remplaçant les fils métalliques linéaires classiquement utilisés par des fils préalablement préparés sous forme d'éléments hélicoïdaux.

L'utilisation des fils selon l'invention présente un avantage essentiel qui est d'offrir une grande flexibilité dans la création des produits finis et de permettre de disposer de nouveaux paramètres de construction qui ne sont pas accessibles dans l'art antérieur. Dans les produits contenant les fils nouveaux de l'invention, il devient possible de prédéterminer la masse moyenne par m$^2$ et l'épaisseur du tissu, de façon indépendante, sans altération de la perte de charge présentée au flux des gaz réactifs.

La présente invention permet de réaliser de nouvelles structures de lits de catalyseurs en utilisant les fils de structure nouvelle ci-dessus en remplacement des fils simples ou linéaires qui constituent les tissus de l'art antérieur. A la différence de la plupart des produits de l'art antérieur, les produits obtenus au moyen des fils nouveaux selon l'invention présentent l'avantage de ne nécessiter aucune adjonction de toiles de l'art antérieur pour être utilisés dans les installations industrielles de fabrication de l'acide nitrique.

Les fils selon l'invention sont destinés à la fabrication de produits tels que des étoffes, des tissus ou des tricots métalliques, ces produits, lorsqu'ils sont constitués principalement de métaux précieux, étant utilisables comme catalyseurs pour la fabrication de l'acide nitrique, de l'acide cyanhydrique, ou bien comme dispositif de captation des métaux précieux volatilisés au cours de la réaction de fabrication de l'acide nitrique.

On connaît déjà des fils contenant un enroulement hélicoïdal de métal. Ainsi, le brevet français FR 2 438 114 décrit des éléments textiles filiformes complexes destinés à servir de substrat à une matière catalytique. Ces éléments sont constitués d'une âme en fibre textile en matériau réfractaire et d'une structure extérieure enveloppante en métal.

Les enroulements hélicoïdaux décrits dans le brevet français FR 2 438 114 constituent un moyen pour améliorer les propriétés mécaniques de certains tissus de fibres réfractaires, du type de ceux qui sont imprégnés de substances catalytiques pour servir de catalyseur dans des appareils de chauffage. Le procédé décrit consiste à envelopper les fibres fragiles au moyen d'un fil métallique qui constitue une armature extérieure. Dans ce procédé, la quantité de fil métallique, inerte du point de vue de la catalyse, est choisie pour masquer le moins possible la surface des fibres à renforcer : de façon typique, le renfort métallique masque moins de 10 % de la surface des fibres. Les articles réalisés selon ce procédé contiennent une faible proportion de matière métallique, ce qui est contraire au but recherché dans la fabrication des catalyseurs pour l'oxydation de l'ammoniac et que permettent d'atteindre les fils selon l'invention.

Ainsi, selon un premier aspect, l'invention concerne une nouvelle structure de fil contenant au moins un enroulement en hélice d'au moins un fil constitué d'un métal du groupe des platinoïdes ou d'un alliage d'un tel métal.

On rappelle que le groupe des platinoïdes, encore appelés métaux de la mine du platine, est constitué des six métaux suivants : platine, ruthénium, rhodium, palladium, osmium et iridium.

Plus précisément, selon une de ces caractéristiques essentielles, l'invention concerne un fil comprenant au moins un élément filiforme enroulé en hélice caractérisé en ce qu'il est constitué d'un coeur ou âme formé d'au moins un élément filiforme autour duquel est enroulé en hélice au moins un élément filiforme constitué d'un métal du groupe des platinoïdes ou d'un alliage d'un de ces métaux.

Ainsi, le fil selon l'invention est constitué d'au moins un élément filiforme dont l'un au moins est constitué en métal du groupe des platinoïdes ou en alliage d'un de ces métaux et se trouve enroulé en hélice.

Toutefois et, ceci dans la mesure où cela ne nuit pas à la clarté de la description, on désignera dans la suite de la description chaque élément filiforme qui constitue lui-même un fil également par le mot fil. Ce n'est que lorsqu'il y aura risque de confusion qu'on utilisera l'expression "élément filiforme".

Selon un autre aspect de l'invention, elle concerne des assemblages des fils ci-dessus en particulier des toiles, des tissus, des tricots, des feutres obtenus par différentes techniques telles que tissage, tricotage, couture, broderie.

Selon un troisième aspect, l'invention concerne l'utilisation des assemblages de fils selon l'invention comme catalyseurs ou comme dispositifs destinés à récupérer les métaux précieux, en particulier dans des procédés chimiques mettant en oeuvre lesdits métaux précieux comme catalyseurs.

Les différents aspects de l'invention sont illustrés dans la description qui suit, faite en regard aux différentes figures.

La figure 1 représente la structure la plus simple d'un fil selon l'invention comportant un coeur autour duquel un fil est enroulé en hélice.

La figure 2 représente l'aspect d'un enroulement en spirale selon l'invention après élimination du coeur.

La figure 3 représente un mode de réalisation du fil selon l'invention où le coeur est constitué de plusieurs fils.

La figure 4 représente un autre mode de réalisation du fil selon l'invention où un des fils constituant le coeur a été éliminé.

La figure 5 représente un autre mode de réalisation du fil selon l'invention où le coeur est constitué d'un ensemble de fils éliminables et non éliminables.

La figure 6 reproduit, à titre comparatif, une photographie d'un tricot obtenu à partir d'un fil linéaire et décrit dans l'exemple comparatif 14.

La figure 7 reproduit une photographie d'un tricot obtenu à partir d'un fil selon l'invention et décrit dans l'exemple 15.

La figure 8 reproduit une photographie de tricot obtenu conformément à l'exemple 16.

Sur une âme ou fil central, constitué d'un ou de plusieurs fils de nature différente ou non, on enroule, à spires jointives ou non, au moins un fil métallique de l'alliage ou du métal dont on souhaite obtenir le produit fini.

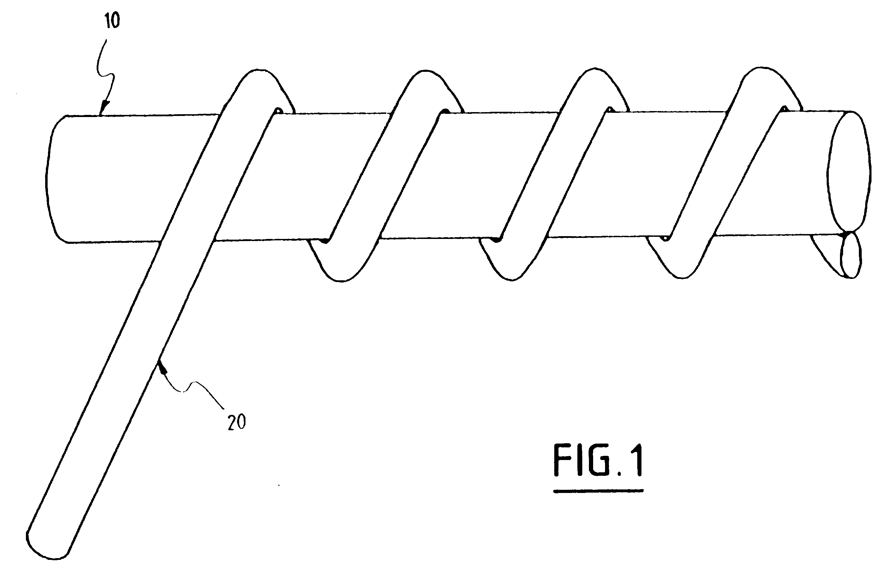

La figure 1 décrit la structure la plus simple d'un fil selon l'invention dans lequel un fil 20 est enroulé en spirale autour d'un fil 10 constituant le coeur.

Le fil 20 est constitué de la matière active nécessaire à l'utilisation finale du produit, c'est-à-dire par exemple d'un alliage de platine dans le cas où l'utilisation finale est celle d'un catalyseur, ou bien d'un alliage de palladium si l'utilisation finale est le captage du platine volatilisé dans un processus catalytique mettant en oeuvre le platine ou un de ces alliages comme catalyseur.

Le fil 10 peut être :

- soit un fil de nature organique, naturelle ou synthétique, constitué d'une matière éliminable par dissolution, fusion ou combustion, comme par exemple le coton, le lin, la rayonne, le Nylon, le polyester, les fibres d'alginates,
- soit un fil d'une matière éliminable de nature minérale, telle qu'un métal facilement soluble dans un acide, comme le cuivre, l'argent, un métal soluble dans une base, comme l'aluminium, ou un métal fusible, comme les alliages d'étain et de plomb,
- soit un fil d'une matière inerte et permanente dans l'utilisation finale, telle qu'un acier ou un alliage inoxydable réfractaire,
- soit un fil de matière active similaire à celle du fil 20.

Par matière active similaire à celle du fil 20, on entend un métal du groupe des platinoïdes ou un alliage d'un de ces métaux connu pour la même activité catalytique dans la réaction de fabrication de l'acide nitrique ou de l'acide cyanhydrique ou pour réaliser des dispositifs de récupération du platine lors de la fabrication de l'acide nitrique. Il pourra donc s'agir d'un platinoïde ou d'un alliage de platinoïde identique ou différent de celui constituant le fil 20.

Les fils utilisés pour réaliser les enroulements 20 en hélice des fils selon l'invention sont le plus souvent au départ sous la forme de fil linéaire, de section circulaire, d'un diamètre compris entre 20 et 400 µm. L'utilisation de fils dont la section aurait une forme différente, tels des fils circulaires laminés ou écrasés préalablement à la mise en oeuvre selon l'invention, fait aussi partie de l'invention. Il est bien connu de l'homme de l'art que des fils ainsi déformés présentent une surface spécifique augmentée, ce qui affecte favorablement l'activité catalytique.

Dans la pratique de la fabrication des toiles catalytiques de l'art antérieur, les fils d'alliages de platine utilisés ont un diamètre compris entre 50 et 90 µm, les compositions d'alliages les plus répandues étant les suivantes : platine allié avec 5% de rhodium, platine allié avec 8% de rhodium, platine allié avec 10% de rhodium, platine allié avec 5% de rhodium et 5% de palladium. Ces mêmes fils sont les fils préférés pour la fabrication des produits nouveaux à usage de catalyseurs selon l'invention, les spires des fils nouveaux ayant un diamètre extérieur $D_e$ compris entre 110 et 1 500 µm, obtenu en effectuant un enroulement sur un coeur de diamètre compris entre 10 et 1 400 µm. Les fils préférés pour la construction des produits catalytiques selon l'invention ont un diamètre extérieur $D_e$ compris entre 110 et 500 µm, obtenu en effectuant un enroulement sur un coeur de diamètre compris entre 10 et 400 µm.

Dans la pratique de la fabrication des toiles de l'art antérieur pour la récupération du platine volatilisé, les fils d'alliages de palladium utilisés ont un diamètre compris entre 50 et 180 µm, les compositions d'alliages les plus répandues étant les suivantes : palladium allié avec 5% de cuivre, palladium allié avec 5% de nickel, palladium allié avec 5 à 20% d'or. Ces mêmes fils sont les fils préférés pour la fabrication des produits nouveaux selon l'invention, pour l'usage de récupération du platine volatilisé, les spires des fils nouveaux ayant un diamètre extérieur $D_e$ compris entre 110 et 1 500 µm, obtenu en effectuant un enroulement sur un coeur de diamètre compris entre 10 et 1 400 µm. Les fils préférés pour la construction des produits selon l'invention destinés à la récupération du platine volatilisé ont un diamètre extérieur $D_e$ compris entre 110 et 750 µm, obtenu en effectuant un enroulement sur un coeur de diamètre compris entre 10 et 650 µm.

De manière condensée, les fils selon l'invention peuvent être caractérisés aussi de manière synthétique par la valeur de leur masse par unité de longueur, cette valeur résultant du choix des paramètres géométriques précédents. Ainsi, les fils préférés selon l'invention sont ceux dont la masse par unité de longueur est comprise entre 1,5 et 5 fois la masse du fil linéaire employé dans leur construction et qui sont obtenus par exemple avec un nombre de spires tel que ces spires recouvrent au minimum 10 % et au maximum 100 % de la surface des fils du coeur. Les fils préférés pour la construction des produits catalytiques et des produits destinés à la récupération du platine volatilisé selon l'invention ont une masse comprise entre 1,8 et 3 fois la masse du fil linéaire entrant dans leur construction. Les fils préférés selon l'invention sont aussi tels que les spires masquent de 20 à 80 % de la surface des fils du coeur, ce qui s'exprime aussi par une distance entre les spires comprise entre 0,25 fois et 4 fois le diamètre du fil qui constitue l'enroulement.

Le fil 20, qui constitue les spires d'une hélice, est généralement unique, mais il peut être lui-même composé, ou bien l'enroulement peut être constitué de plusieurs fils en parallèle, éventuellement de natures différentes, ce qui fait partie de l'invention. De plus le fil 20, ainsi que les autres fils entrant dans la construction d'un fil selon l'invention, n'a pas nécessairement une section circulaire. Il peut être utile de laminer préalablement un fil rond pour le transformer en un ruban que l'on utilise pour le fil 20 ; dans ce cas, le fil réalisé selon l'invention avec un tel ruban présente une surface externe aplanie, ce qui facilite le glissement de ce fil, une telle propriété étant utile si le fil est employé dans une machine à tricoter.

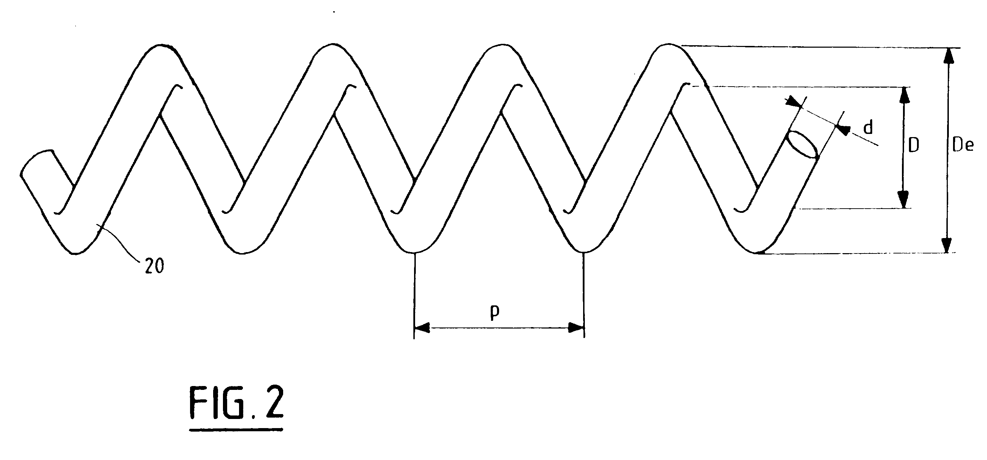

La figure 2 montre l'aspect d'un fil selon l'invention, après élimination du fil central par un procédé quelconque, laissant seulement présent le fil de matière active enroulé en hélice. Un tel fil est caractérisé par son diamètre externe "$D_e$", par le diamètre "d" du fil initial, par le diamètre intérieur "D" des spires et par le pas "p" de l'enroulement qui est la distance entre les axes de deux spires voisines. Chacun de ces paramètres peut être choisi librement, à l'exception du diamètre externe $D_e$ qui vaut D + 2d ; cette liberté constitue une caractéristique et un avantage essentiel de l'invention, en procurant une large latitude pour le choix de la masse et de la microgéométrie des fils obtenus selon l'invention et des produits finis que ces fils permettent de réaliser.

Un autre avantage des fils selon l'invention est qu'ils présentent des propriétés nouvelles facilitant la mise en oeuvre dans les opérations de fabrication de tissus par tissage ou par tricotage : ainsi, le fil central servant de support est celui qui procure les caractéristiques de résistance à la traction du fil selon l'invention. Le fil central peut ainsi selon l'invention être choisi parmi des fibres textiles ayant un fort allongement à la rupture, bien supérieur à celui des simples fils métalliques. Le fil selon l'invention présentera ainsi les mêmes caractéristiques d'allongement que le fil textile, tout en incorporant dans sa structure l'élément métallique qui donnera au produit fini les propriétés chimiques recherchées en tant que catalyseur.

Le fil préparé selon l'invention permet la fabrication de toiles, de tissus, de tricots, par toutes les techniques telles que, en particulier, tissage, tricotage, couture, broderie, sans avoir la fragilité d'un fil métallique massif.

Il peut être choisi d'éliminer le fil central avant l'utilisation du produit fini, par exemple par décomposition, par dissolution, par fusion, par oxydation, ou bien de le conserver jusqu'à l'instant de l'utilisation finale, ce qui rend les toiles et tricots selon l'invention faciles à manipuler. Selon la nature du fil central et les conditions de l'utilisation finale, le fil central pourra être éliminé rapidement ou lentement, et de manière partielle ou totale.

Si on choisit d'éliminer le fil central, le tissu obtenu, constitué uniquement de fils hélicoïdaux, est exagérément élastique et déformable, les spires pouvant s'étirer facilement. Un tel tissu manque de rigidité au point qu'il devient difficilement manipulable sans subir de déformations. Pour pallier cet inconvénient, une disposition de l'invention consiste à introduire un fil supplémentaire dans l'âme centrale, conjointement avec le fil de matière éliminable.

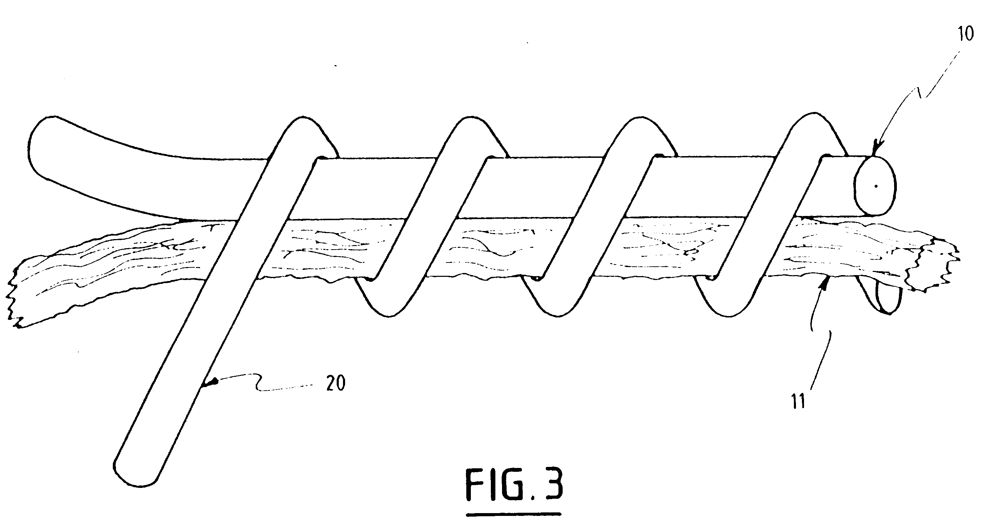

Cette disposition, qui fait partie de l'invention, est illustrée par la figure 3 où le coeur est constitué des fils 10 et 11, sur lequel est enroulé le fil 20, chacun des fils 10 et 11 pouvant être :

- soit un fil d'une matière éliminable de nature organique, soluble, fusible ou combustible, telle qu'une fibre textile,

- soit un fil d'une matière éliminable de nature minérale, telle qu'un métal facilement soluble, fusible ou oxydable,

- soit un fil d'une matière inerte et permanente dans l'utilisation finale, telle qu'un acier ou un alliage inoxydable réfractaire,

- soit un fil de matière active similaire à celle du fil 20, le fil 20 étant constitué de la matière active nécessaire à l'utilisation finale du produit, c'est-à-dire par exemple d'un alliage de platine dans le cas où l'utilisation finale est celle d'un catalyseur, ou bien d'un alliage de palladium si l'utilisation finale est le captage du platine volatilisé au cours d'un processus catalytique mettant en oeuvre du platine ou un alliage de platine comme catalyseur.

Nous avons constaté qu'un fil selon l'invention préparé selon la disposition ci-dessus conserve les propriétés mécaniques nouvelles apportées par l'invention, à savoir que les caractéristiques de résistance à la traction restent celles du fil le plus résistant introduit dans l'âme du fil.

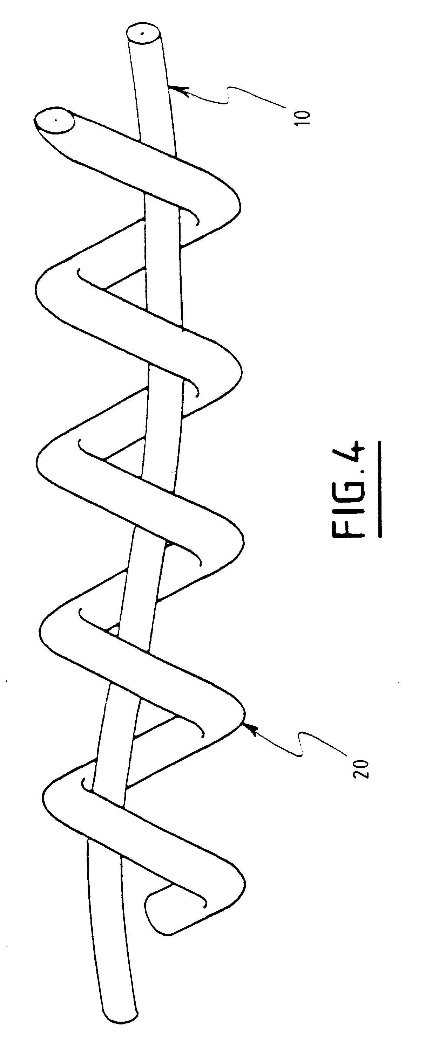

La figure 4 illustre le cas où le fil 11 a été choisi parmi les matières éliminables et où il a été éliminé par un procédé approprié. Le produit obtenu, qui fait partie de l'invention, n'est plus constitué que du fil 20 en forme d'hélice incluant dans son espace intérieur le fil 10. Dans cet état, le fil 20, libre de toutes contraintes, peut se positionner librement dans tout l'espace disponible libéré par l'élimination du fil 11.

Il résulte également de l'invention, selon laquelle on prépare un fil comportant un élément hélicoïdal dans l'espace intérieur duquel peut se trouver un fil linéaire, que les produits, tissus ou tricots, préparés avec un tel fil, présentent un comportement exceptionnel vis-à-vis des déformations. En effet, dans le cas où un effort de traction exercé sur un tissu amène la rupture des fils, un tissu de l'art antérieur présente une déchirure qui est une ouverture à travers laquelle peuvent passer les gaz réactifs sans contact avec la matière catalytique ; ceci se traduit par une perte de rendement de réaction qui peut conduire à l'arrêt de l'exploitation. Un tissu préparé avec un fil de l'invention ne présente pas cet inconvénient : en cas d'effort excessif exercé sur le tissu, il se produit d'abord la rupture des fils linéaires, si ceux-ci sont présents ; mais les fils hélicoïdaux ne font que s'étirer. Selon les caractéristiques de fabrication, telles que le diamètre de l'âme et le pas des spires, les fils hélicoïdaux peuvent ainsi s'étirer de plusieurs fois leur longueur sans se rompre. Ceci a pour conséquence qu'un tissu préparé avec un fil de l'invention et soumis à des efforts de traction excessifs s'étire localement sans créer d'ouverture permettant le passage des gaz de réaction sans contact avec la matière active ou catalytique.

Dans le cas de la fabrication sous forme de tricot, on peut utiliser le fil précédent, comprenant un fil de renforcement dans l'âme centrale. Il est aussi possible d'utiliser un fil hélicoïdal avec âme éliminable selon l'invention et d'alimenter simultanément la machine à tricoter avec ce fil et un fil de renforcement linéaire qui peut être métallique. Dans ce cas, dans le produit fini, le fil de renforcement se trouvera en tous points parallèle à l'axe du fil hélicoïdal selon l'invention, mais à l'extérieur de l'hélice.

Dans les deux exemples ci-dessus, le fil linéaire permet de renforcer le tricot réalisé.

Selon un autre mode de réalisation de tricots selon l'invention, on peut réaliser un tricot au moyen d'un fil linéaire et insérer entre les mailles de ce tricot un fil hélicoïdal selon l'invention. Un tel tricot composite présente l'avantage de pouvoir être réalisé en une seule opération en utilisant, par exemple, une machine à tricoter circulaire munie de deux dispositifs d'alimentation en fil.

Dans de tels tricots composites, le fil linéaire utilisé pourra être soit un fil en platinoïde ou alliage de platinoïde de nature identique à celui utilisé pour l'enroulement hélicoïdal, soit un fil en matériau réfractaire inerte à la température de mise en oeuvre du catalyseur.

Dans le cas du tissage, il suffit d'introduire une proportion de fils linéaires parmi les fils selon l'invention, cette proportion pouvant être différente dans la chaîne et dans la trame.

Ces fils linéaires sont constitués soit de fils en platinoïde ou en alliage de platinoïde de même type que ceux utilisés pour réaliser l'enroulement hélicoïdal soit de fils constitués d'un alliage réfractaire.

L'emploi d'un fil hélicoïdal dont l'âme contient un fil de renforcement linéaire fait aussi partie de l'invention, et de telles réalisations sont décrites dans les exemples ci-après.

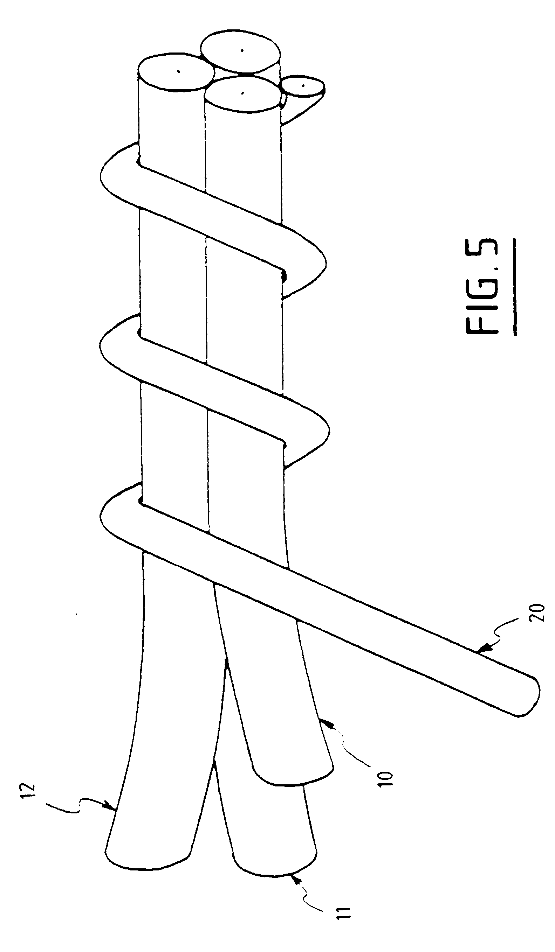

La figure 5 illustre schématiquement le cas d'un fil selon l'invention dont l'âme est constituée de plusieurs fils, ici trois fils 10, 11, 12, éventuellement de nature différente, certains pouvant être éliminables et d'autres non éliminables.

Il est également possible, toujours selon l'invention, de fabriquer préalablement le fil central sous une forme plus élaborée, telle que celle d'un toron de fils éliminables et de fils non éliminables.

Une autre variante de fils selon l'invention dans lesquels l'âme du fil est formée à la fois de matière éliminable et non éliminable consiste à utiliser, comme fil constituant l'âme du fil selon l'invention, un fil constitué d'une matière non éliminable revêtu d'une matière éliminable, le revêtement pouvant être obtenu par tout procédé tel que vernissage, enrobage, électrophorèse, dépôt galvanique par lequel un fil d'une matière non éliminable est revêtu d'une matière éliminable.

Les exemples ci-dessous sont donnés à titre purement illustratif de l'invention et de ses avantages.

## EXEMPLES

Dans le but d'illustrer la présente invention, de façon non limitative, on donne ci-dessous quelques exemples descriptifs de réalisation pratique des fils qu'elle permet d'obtenir ainsi que leurs utilisations.

Les exemples 1 à 6 démontrent un avantage essentiel de l'invention qui est la liberté dans le choix de la masse et de la géométrie des fils. De même, la réalisation pratique des tissus des exemples 7 à 12 démontre que cet avantage existe également pour les produits fabriqués avec les fils de l'invention. Les fils selon l'invention permettent d'obtenir à titre d'exemple des tissus dont la masse au m$^2$ est de 1,25 à 3 fois plus grande que celle des toiles de l'art antérieur, ces limites n'étant nullement celle de l'invention. Cet avantage est obtenu en employant les mêmes fils que ceux qui constituent les toiles de l'art antérieur, et en les incorporant en tant qu'éléments filiformes pour faire apparaître au moins un élément hélicoïdal constitutif des fils selon l'invention.

Une autre propriété des fils de l'invention quand ils sont mis en oeuvre dans la technique de tissage est qu'il permettent plusieurs constructions possibles pour obtenir la même masse au m$^2$ des produits finis. Cette propriété est illustrée par les exemples 9 et 12 qui concernent la fabrication de toiles dont la masse au m$^2$ est voisine de 1 100 g. L'exemple 9 utilise une chaîne comportant 32 fils/cm alors que dans l'exemple 12 la chaîne ne comporte que 16 fils/cm, les fils de trame étant toujours au nombre de 24/cm ; la quantité de matière moins importante dans la chaîne est compensée en utilisant un fil plus lourd dans le sens de la trame, cette augmentation de masse du fil de trame ayant été obtenue en augmentant le nombre de spires au cm dans la préparation du fil de trame selon l'invention. Cette propriété constitue un avantage apporté par les fils de l'invention à la technique du tissage, car ils permettent de diminuer le nombre des fils de chaîne et donc de réduire sensiblement le temps de montage de la chaîne et donc les coûts de fabrication.

Cette mise en oeuvre des fils selon l'invention, qui a l'effet apparent d'augmenter la quantité de matière présente dans chaque m$^2$ de tissu, ne se traduit pas par une diminution de la transparence et un accroissement de la perte de charge, comme cela arriverait en augmentant le nombre de fils d'un tissu de l'art antérieur. La propriété spécifique que procurent les fils selon l'invention est qu'ils permettent de préparer des produits plus épais que ceux qui sont obtenus par le tissage de fils linéaires ; en fait, les produits réalisés deviennent véritablement tridimensionnels, leur épaisseur pouvant être choisie librement à partir de la valeur du diamètre "D" de l'âme servant à l'enroulement. En tissage de tissus de l'art antérieur, l'épaisseur ne dépend que du diamètre des fils, de la tension mécanique appliquée pendant le tissage et du motif de tissage : l'épaisseur d'un tissu de l'art antérieur est de 2 fois le diamètre des fils en tissage droit et d'environ 3 fois le diamètre des fils en tissage en chevrons.

La réalisation pratique des tissus des exemples 8 à 12 a permis de découvrir deux autres avantages des produits selon l'invention par rapport aux produits de l'art antérieur.

Une propriété nouvelle des tissus préparés avec les fils de l'invention est qu'ils présentent une rigidité accrue qui rend très difficile leur déformation dans le sens des bissectrices des directions des fils de chaîne et des fils de trame, alors que ce type de déformation est très facile avec les tissus de l'art antérieur. Il résulte de cette propriété qu'une toile circulaire selon l'invention a l'avantage de conserver sa forme circulaire après manipulations, alors qu'une toile de l'art antérieur manipulée sans précautions devient facilement ovale.

Cette propriété est la conséquence de l'imbrication des fils de chaîne, qui sont des fils linéaires dans nos exemples, entre les spires des fils de trame, qui sont des fils hélicoïdaux selon l'invention.

Le second avantage concerne précisément le contact entre les gaz réactifs et les fils de matière active. Dans une toile de l'art antérieur, il y a de nombreux points de croisement avec contact ponctuel entre les fils de trame et les fils de chaîne ; il y a exactement un croisement de fils par maille, ces mailles étant le plus usuellement au nombre de 1 024/cm$^2$, lorsque la toile comprend 32 fils de chaîne et 32 fils de trame/cm. Il est bien connu de l'homme de l'art que l'examen des toiles catalytiques usagées au microscope à balayage révèle que les points dc croisement et la zone proche qui les entoure sont des régions peu actives du point de vue de la catalyse car ces zones constituent des anfractuosités dans lesquelles les gaz réactifs ne diffusent que difficilement. Dans une toile de l'art antérieur, les croisements de fils sont donc des zones peu actives qui contiennent une fraction de surface des fils qui demeure peu ou pas utile au contact des gaz avec les fils.

Dans une toile tissée avec un fil selon l'invention, comprenant un élément en forme d'hélice, les croisements de fils, rapportés à l'unité de masse, sont moins nombreux, à maillage égal, que dans une toile de l'art antérieur ; ceci est simplement dû au fait que les spires d'hélice comprises entre deux croisements représentent une plus grande quantité de matière que le simple fil linéaire qui remplacerait cette hélice. De plus, l'utilisation des fils selon l'invention autorise une diminution du nombre des fils de chaîne aussi bien que celui des fils de trame, tout en permettant de fabriquer des tissus plus denses que le tissu de l'art antérieur, comme les exemples 7 à 11 le montrent. Il s'ensuit que les fils selon l'invention permettent une diminution importante du nombre de points de croisements effectifs entre fils, et donc une meilleure utilisation de la surface des fils mise en oeuvre. De plus, dans le cas des produits tissés avec des fils de l'invention, l'orientation géométrique des lieux de croisement entre fils est différente de celle qui est présentée par les produits antérieurs ; en effet, dans les produits antérieurs, les points de croisement sont toujours situés sous un fil, ce qui crée un effet d'ombrage et les rend peu accessibles au courant gazeux qui doit contourner ce fil ; dans un tissu contenant des fils de l'invention en fils de trame et des fils linéaires pour la chaîne, l'orientation des spires d'hélice est presque orthogonale par rapport au cas précédent ; il s'ensuit que les lieux de croisement de fils présentent leur ouverture directement dans le sens du courant gazeux et qu'ils peuvent donc être plus efficaces pour les contacts avec les gaz de réaction.

En résumé, les fils selon l'invention permettent une diminution de la densité des points de croisement, rapportée à l'unité de masse, ainsi qu'une amélioration de la circulation des gaz dans les lieux de croisement restants. Ces propriétés se traduisent ensemble par un accroissement de la surface disponible pour les échanges avec la phase gazeuse, ainsi que par une amélioration de la diffusion vers cette surface, avec la conséquence pour l'utilisation finale d'une sensible augmentation du rendement de catalyse et d'une augmentation de la durée de vie des toiles catalytiques. Dans le cas de l'application des fils de l'invention aux toiles d'alliages de palladium utilisées pour le captage du platine volatilisé, l'avantage procuré est une meilleure efficacité de captage.

Par ailleurs, l'exemple 15 montre clairement le gain de masse spécifique obtenu pour un tricot composite réalisé en associant un fil simple et un fil selon l'invention par rapport au tricot obtenu sur la même machine avec un fil linéaire simple et décrit dans l'exemple comparatif 14.

La présente invention trouve son application dans la préparation de feutres, de tissus, de tricots, ou de tous assemblages de fils de métaux précieux et de leurs alliages qui sont utilisés comme masse catalytique pour la fabrication de l'acide nitrique, ou de l'acide cyanhydrique, ou bien comme dispositif de captation des métaux précieux volatilisés au cours de ces réactions.

## EXEMPLE 1

Un fil d'alliage de platine à 8% de rhodium de 76 μm de diamètre, qui a une masse de 92 mg/m, est enroulé autour d'un fil de coton de calibre 60 à raison de 70 spires/cm. Le fil obtenu a un diamètre de 320 μm et une masse de 450 mg/m comprenant 36 mg de coton par mètre.

## EXEMPLE 2

Un fil d'alliage de palladium à 5% de cuivre de 76 µm de diamètre, qui a une masse de 53 mg/m, est enroulé autour d'un fil de coton de calibre 60 à raison de 70 spires/cm. Le fil obtenu a un diamètre de 320 µm et une masse de 320 mg/m, comprenant 36 mg de coton par mètre.

## EXEMPLE 3

Un fil de coton de calibre 60 et un fil d'alliage de platine à 8% de rhodium de 76 µm de diamètre sont disposés parallèlement. Un second fil d'alliage de platine à 8% de rhodium de 76 µm de diamètre est enroulé autour des deux fils précédents à raison de 70 spires/cm. Le fil obtenu a un profil aplati ; son diamètre apparent est de 300 à 350 µm et sa masse est de 570 mg/m, comprenant 36 mg de coton par mètre.

## EXEMPLE 4

Un fil de coton de calibre 60 et un fil d'alliage de palladium à 5% de cuivre de 76 µm de diamètre, qui a une masse de 53 mg/m, sont disposés parallèlement. Un second fil d'alliage de palladium à 5% de cuivre de 76 µm de diamètre est enroulé autour des deux fils précédents à raison de 70 spires/cm. Le fil obtenu a un profil aplati ; son diamètre apparent est de 300 à 350 µm et sa masse est de 380 mg/m, comprenant 36 mg de coton par mètre.

## EXEMPLE 5

Un fil de coton de calibre 60 et un fil d'alliage de platine à 8% de rhodium de 76 µm de diamètre sont disposés parallèlement. Un second fil d'alliage de platine à 8% de rhodium de 76 µm de diamètre est enroulé autour des deux fils précédents à raison de 35 spires/cm. Le fil obtenu a un diamètre de 300 µm et une masse de 400 mg/m, comprenant 36 mg de coton par mètre.

## EXEMPLE 6

Un fil de coton de calibre 60 et un fil d'alliage de palladium à 5% de cuivre de 76 µm de diamètre, qui a une masse de 53 mg/m, sont disposés parallèlement. Un second fil d'alliage de palladium à 5% de cuivre de 76 µm de diamètre est enroulé autour des deux fils précédents à raison de 35 spires/cm. Le fil obtenu a un profil aplati ; son diamètre apparent est de 300 à 350 µm et sa masse est de 230 mg/m, comprenant 36 mg de coton par mètre.

Les exemples 1 à 6 démontrent le premier avantage essentiel de l'invention, qui est de procurer une grande liberté de construction par le choix de la masse et de la microgéométrie des fils que l'invention permet de réaliser, en fonction du diamètre externe $D_e$, du diamètre "d" du fil initial, du diamètre intérieur "D" des spires, déterminé par la structure du fil central et du pas "p" de l'enroulement qui est la distance entre les axes de deux spires voisines.

Une méthode industrielle préférée pour la fabrication des fils décrits dans les exemples est l'utilisation d'une machine de guipage, appelée aussi broche à mouliner dans l'industrie textile. Cette méthode préférée n'est cependant nullement limitative, les fils selon l'invention pouvant être aussi obtenus par d'autres procédés tels que l'enroulement sur un mandrin ; dans ce cas, l'hélice obtenue est dégagée par glissement hors du mandrin au fur et à mesure de sa formation. Un mandrin creux peut permettre d'introduire un ou plusieurs fils à l'intérieur de l'hélice, sans que ces fils servent de support d'enroulement.

Pour compléter l'illustration de la présente invention, de façon non limitative, on donne ci-dessous quelques exemples descriptifs de réalisation pratique des produits finis que l'on peut fabriquer au moyen des fils nouveaux selon l'invention.

## EXEMPLE 7

Le fil de l'exemple 3, constitué d'un fil d'alliage de platine à 8% de rhodium de 76 µm de diamètre enroulé à raison de 70 spires/cm autour d'un fil de coton et d'un fil d'alliage de platine à 8% de rhodium de 76 µm de diamètre, est utilisé pour la fabrication d'un tissu, au moyen d'un métier à tisser manuel.

On réalise ainsi une toile tissée comprenant des fils de chaîne distants de 6,35 mm et des fils de trame jointifs. Un disque de 70 mm de diamètre de ce tissu contient une masse de métaux précieux de 7,0 g, soit une masse de 1 820 g/m². A titre de comparaison, le tissu de l'art antérieur préparé avec le même fil, qui est tissé avec 32 fils/cm dans le sens de la chaîne et dans le sens de la trame, et qui comprend 1 024 mailles/cm², a une masse de 620 g/m².

Le tissu de cet exemple, préparé au moyen d'un fil conforme à l'invention, peut être utilisé comme toile catalytique dans une installation d'oxydation d'ammoniac en substitution à 3 toiles de l'art antérieur.

## EXEMPLE 8

Le fil de l'exemple 5, constitué d'un fil d'alliage de platine à 8% de rhodium de 76 µm de diamètre enroulé à raison de 35 spires/cm autour d'un fil de coton et d'un fil d'alliage de platine à 8% de rhodium de 76 µm de diamètre, est utilisé pour la fabrication d'un tissu, au moyen d'un métier à tisser industriel de 2,50 m de largeur.

Le fil selon l'invention est utilisé comme fil de trame, les fils de chaîne étant des fils simples, du même alliage, de 76 µm de diamètre. Le tissu obtenu comprend 32 fils de chaîne/cm et 24 fils de trame/cm. La masse moyenne de ce tissu est de 1 211 g/m², soit 95% de plus que la masse de 620 g/m² du tissu de l'art antérieur préparé avec le même fil, et tissé avec 32 fils/cm dans le sens de la chaîne et dans le sens de la trame. L'épaisseur du tissu obtenu avec le fil de l'invention est de 340 μm, alors que le tissu de l'art antérieur a une épaisseur de 210 μm, légèrement supérieure au double du diamètre des fils.

Le tissu de cet exemple préparé au moyen d'un fil conforme à l'invention peut être utilisé comme toile catalytique dans une installation d'oxydation d'ammoniac en substitution à 2 toiles de l'art antérieur.

**EXEMPLE 9**

Le fil de l'exemple 5, constitué d'un fil d'alliage de platine à 8% de rhodium de 76 μm de diamètre enroulé à raison de 35 spires/cm autour d'un fil de coton et d'un fil d'alliage de platine à 8% de rhodium de 76 μm de diamètre, est utilisé pour la fabrication d'un tissu, au moyen d'un métier à tisser industriel de 2,50 m de largeur.

Le fil selon l'invention est utilisé comme fil de trame, les fils de chaîne étant des fils simples, du même alliage, de 76 μm de diamètre. Le tissu obtenu comprend 32 fils de chaîne/cm et 21 fils de trame/cm. La masse moyenne de ce tissu est de 1 098 g/m², soit 77% de plus que la masse de 620 g/m² du tissu de l'art antérieur préparé avec le même fil, et tissé avec 32 fils/cm dans le sens de la chaîne et dans le sens de la trame. L'épaisseur du tissu obtenu avec le fil de l'invention est de 340 μm, alors que le tissu de l'art antérieur a une épaisseur de 210 μm, légèrement supérieure au double du diamètre des fils.

Le tissu de cet exemple, préparé au moyen d'un fil conforme à l'invention, peut être utilisé comme toile catalytique dans une installation d'oxydation d'ammoniac, 2 épaisseurs de ce nouveau tissu pouvant venir en substitution à 3 toiles de l'art antérieur.

**EXEMPLE 10**

Le fil de l'exemple 6, constitué d'un fil d'alliage de palladium avec 5% de cuivre de 76 μm de diamètre enroulé à raison de 35 spires/cm autour d'un fil de coton et d'un fil d'alliage de palladium avec 5% de cuivre de 76 μm de diamètre, est utilisé pour la fabrication d'un tissu, au moyen d'un métier à tisser industriel de 2,50 m de largeur.

Le fil selon l'invention est utilisé comme fil de trame, les fils de chaîne étant des fils simples, du même alliage, de 76 μm de diamètre. Le tissu obtenu comprend 32 fils de chaîne/cm et 19 fils de trame/cm. La masse moyenne de ce tissu est de 575 g/m², soit 47% de plus que la masse de 390 g/m² du tissu de l'art antérieur tissé avec 32 fils/cm dans le sens de la chaîne et dans le sens de la trame, préparé avec le même fil. L'épaisseur du tissu obtenu avec le fil de l'invention est de 340 μm, alors que le tissu de l'art antérieur a une épaisseur de 210 μm,

légèrement supérieure au double du diamètre des fils.

Le tissu de cet exemple, préparé au moyen d'un fil conforme à l'invention, peut être utilisé comme toile de récupération du platine volatilisé dans une installation d'oxydation d'ammoniac, sa capacité d'absorption de platine étant environ 1,5 fois celle d'une toile de l'art antérieur.

Les exemples 7 à 10 ci-dessus décrivent des réalisations de produits utilisant des fils de l'invention et n'incluant, outre un fil de coton, que des métaux précieux de composition homogène. Il est aussi possible de créer des produits incluant des fils de métaux précieux selon l'invention associés à des fils de métaux communs, comme le montre à titre descriptif et nullement limitatif l'exemple 11.

**EXEMPLE 11**

Le fil de l'exemple 5, constitué d'un fil d'alliage de platine à 8% de rhodium de 76 μm de diamètre enroulé à raison de 35 spires/cm autour d'un fil de coton et d'un fil d'alliage de platine à 8% de rhodium de 76 μm de diamètre, est utilisé pour la fabrication d'un tissu, au moyen d'un métier à tisser industriel de 2,50 m de largeur.

Le fil selon l'invention est utilisé comme fil de trame, les fils de chaîne étant des fils simples, d'un alliage réfractaire tel que le Kanthal (marque déposée de la société Bulten-Kanthal AB), de 60 μm de diamètre. Le tissu obtenu comprend 16 fils de chaîne/cm et 21 fils de trame/cm. La masse moyenne de ce tissu est de 822 g/m², se décomposant en 788 g de fils d'alliage de platine à 8% de rhodium et 34 g de fils d'alliage réfractaire. La partie catalytiquement active de ce tissu, à savoir les 788 g de fils d'alliage de platine à 8% de rhodium, représentent une masse au m² supérieure de 27% à la masse de 620 g/m² du tissu de l'art antérieur préparé avec le même fil, et tissé avec 32 fils/cm dans le sens de la chaîne et dans le sens de la trame. L'épaisseur du tissu obtenu avec le fil de l'invention est de 340 μm, alors que le tissu de l'art antérieur a une épaisseur de 210 μm, légèrement supérieure au double du diamètre des fils.

Le tissu de cet exemple, préparé au moyen d'un fil conforme à l'invention auquel est adjoint un fil réfractaire, peut être utilisé comme toile catalytique dans une installation d'oxydation d'ammoniac, 4 épaisseurs de ce nouveau tissu pouvant venir en substitution à 5 toiles de l'art antérieur.

**EXEMPLE 12**

Un fil selon l'invention est constitué d'un fil d'alliage de platine à 8% de rhodium de 76 μm de diamètre enroulé à raison de 42 spires/cm autour d'un fil de coton et d'un fil d'alliage de platine à 8% de rhodium de 76 μm de diamètre ; sa masse est de 480 mg/m. Il est utilisé pour la fabrication d'un tissu, au moyen d'un métier à tisser industriel de 2,50 m de largeur.

Le fil selon l'invention est utilisé comme fil de trame, les fils de chaîne étant des fils simples, du même alliage, de 76 µm de diamètre. Le tissu obtenu comprend 16 fils de chaîne/cm et 21 fils de trame/cm. La masse moyenne de ce tissu est de 1 092 g/m², soit 76% de plus que la masse de 620 g/m² du tissu de l'art antérieur préparé avec le même fil, et tissé avec 32 fils/cm dans le sens de la chaîne et dans le sens de la trame. L'épaisseur du tissu obtenu avec le fil de l'invention est de 340 µm, alors que le tissu de l'art antérieur a une épaisseur de 210 µm, légèrement supérieure au double du diamètre des fils.

Le tissu de cet exemple, préparé au moyen d'un fil conforme à l'invention, peut être utilisé comme toile catalytique dans une installation d'oxydation d'ammoniac, 2 épaisseurs de ce nouveau tissu pouvant venir en substitution à 3 toiles de l'art antérieur.

## EXEMPLE 13

Le fil de l'exemple 5, constitué d'un fil d'alliage de platine à 8% de rhodium de 76 µm de diamètre enroulé à raison de 35 spires/cm autour d'un fil de coton et d'un fil d'alliage de platine à 8% de rhodium de 76 µm de diamètre, est utilisé pour la fabrication d'un tricot, au moyen d'un métier à tricoter industriel de 600 mm de diamètre.

Le fil selon l'invention est utilisé comme fil unique d'alimentation de cette machine qui comprend 12 aiguilles/cm. Le tricot tubulaire obtenu a une largeur à plat de 1 880 mm, il comprend 12 mailles/cm et 9 rangs/cm, soit 108 mailles au cm². La masse moyenne de ce tricot est de 780 g/m², soit 26% de plus que la masse de 620 g/m² du tissu de l'art antérieur préparé avec le même fil, et tissé avec 32 fils/cm dans le sens de la chaîne et dans le sens de la trame. L'épaisseur du tricot obtenu avec le fil de l'invention est de 700 µm, alors que le tissu de l'art antérieur a une épaisseur de 210 µm, légèrement supérieure au double du diamètre des fils.

Le tissu de cet exemple, préparé au moyen d'un fil conforme à l'invention, peut être utilisé comme toile catalytique dans une installation d'oxydation d'ammoniac, 3 épaisseurs de ce nouveau tissu pouvant venir en substitution à 4 toiles de l'art antérieur.

## EXEMPLE 14 (Comparatif)

Un fil simple d'alliage de platine à 5 % de rhodium de 76 µm de diamètre est utilisé pour alimenter une machine à tricoter circulaire de 700 mm de diamètre, équipée d'aiguilles de jauge 24. Le mécanisme de cette machine est adapté pour obtenir le tricot le plus simple, ou jersey.

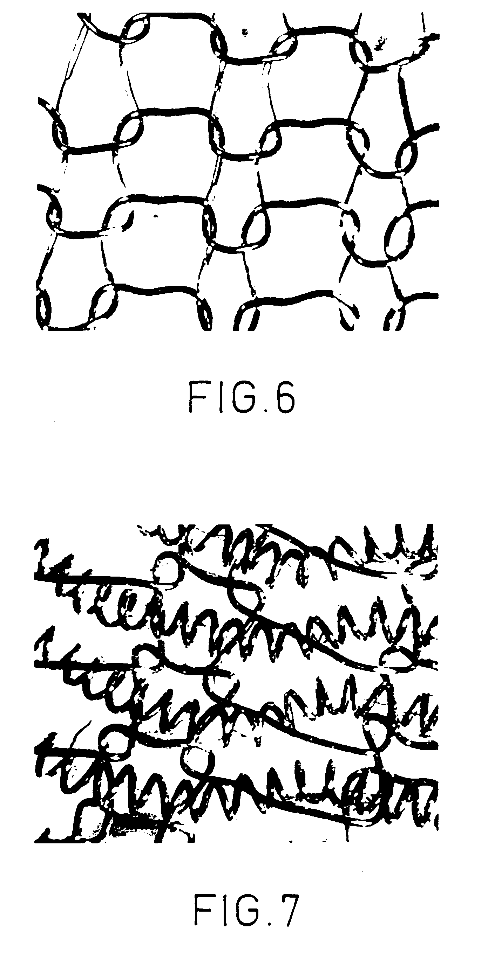

La mise en oeuvre de 1 250 g de fil a permis d'obtenir un tricot tubulaire de 2,21 m de longueur et de 650 mm de diamètre représentant une surface de 4,52 m². La photographie représentée sur la figure 6 montre la macrostructure de ce tricot avec un grossissement de 25 fois. La masse spécifique de ce tricot est de 276 g/m². A titre de comparaison, le tissu de l'art antérieur préparé avec le même fil, qui est tissé avec 32 fils par cm dans le sens de la chaîne et dans le sens de la trame, et qui comprend 1 024 mailles par cm², a une masse de 620 g/m².

## EXEMPLE 15

Un fil simple d'alliage de platine à 5 % de rhodium de 76 µm de diamètre est utilisé de la même manière que dans l'exemple 14 pour alimenter une machine à tricoter circulaire de 700 mm de diamètre, équipée d'aiguilles de jauge 24.

Par ailleurs, on prépare un fil selon l'invention de la façon suivante : 2 fils de coton de calibre 60 sont disposés parallèlement. Un fil d'alliage de platine à 5 % de rhodium de 76 µm de diamètre est enroulé autour des deux fils précédents à raison de 35 spires par cm. Le fil obtenu a un diamètre moyen de 300 µm et une masse de 295 mg par mètre, comprenant 72 mg de coton.

La machine à tricoter est munie d'un second dispositif d'alimentation qui reçoit le fil selon l'invention : dans ces conditions, il est possible d'obtenir un tricot composite associant le fil simple, qui constitue un réseau disposé selon la description de l'exemple 14, et le fil selon l'invention, qui est inséré entre les mailles du réseau précédent. La photographie reproduite sur la figure 7 montre la macrostructure du tricot obtenu avec un grossissement de 25 fois, après que les fils de coton inclus dans le fil selon l'invention aient été éliminés par combustion. La masse spécifique de ce tricot est de 645 g/m², composée de 276 g/m² de fil simple disposé en jersey comme décrit dans l'exemple 14 et de 369 g/m² de fil selon l'invention qui sont disposés parallèlement à raison de 15 fils par cm.

Le tricot obtenu dans cet exemple a une masse spécifique très proche de celle d'un tissu de l'art antérieur préparé avec le même fil, que l'on tisse avec 32 fils par cm dans le sens de la chaîne et dans le sens de la trame, pour atteindre une masse de 620 g/m².

## EXEMPLE 16

Un fil simple d'un alliage pour résistances électriques tel que le GILPHY 70 (marque déposée de la société IMPHY) de 80 µm de diamètre et d'une masse de 41 mg par mètre est utilisé de la même manière que dans l'exemple 14 pour alimenter une machine à tricoter circulaire de 700 mm de diamètre, équipée d'aiguilles de jauge 24.

Par ailleurs, on prépare un fil selon l'invention de la façon suivante : 2 fils de coton de calibre 60 sont disposés parallèlement. Un fil d'alliage de platine à 5 % de rhodium de 76 µm de diamètre est enroulé autour des deux fils précédents à raison de 55 spires par cm. Le fil obtenu a un diamètre moyen de 300 µm et une masse de 405 mg par mètre, comprenant 72 mg de coton.

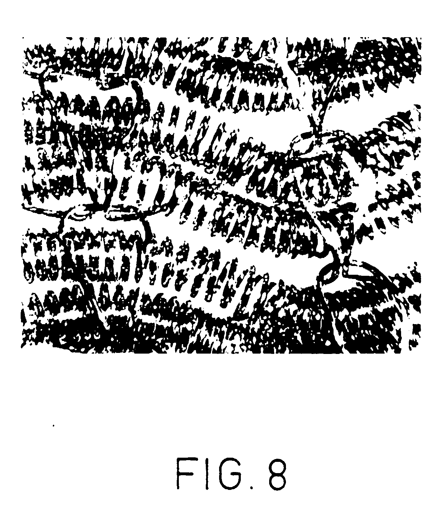

La machine à tricoter est munie d'un second dispositif d'alimentation qui reçoit le fil selon l'invention : dans ces conditions, il est possible d'obtenir un tricot composite associant le fil simple, qui constitue un réseau disposé selon la description de l'exemple 14, et le fil selon l'invention, qui est inséré entre les mailles du réseau précédent. La photographie reproduite sur la figure 8 montre la macrostructure du tricot obtenu avec un grossissement de 25 fois, après que les fils de coton inclus dans le fil selon l'invention aient été éliminés par combustion ; cette macrostructure est identique à celle de l'exemple 15. La masse spécifique de ce tricot est de 703 g/m$^2$, composée de 123 g/m$^2$ de fil GILPHY 70 disposé en jersey comme décrit dans l'exemple 14 et de 580 g/m$^2$ de fil d'alliage de platine à 5 % de rhodium selon l'invention qui sont disposés parallèlement à raison de 15 fils par cm.

Le tricot obtenu dans cet exemple a une masse spécifique en métal précieux contenu très proche de celle d'un tissu de l'art antérieur préparé avec le même fil, que l'on tisse avec 32 fils par cm dans le sens de la chaîne et dans le sens de la trame, pour atteindre une masse de 620 g/m$^2$.

## Revendications

1. Fil comprenant au moins un élément filiforme enroulé en hélice, caractérisé en ce qu'il est constitué d'un coeur ou âme formé d'au moins un élément filiforme (10, 11, 12) autour duquel est enroulé en hélice au moins un élément filiforme (20) constitué d'un métal du groupe des platinoïdes ou d'un alliage d'un de ces métaux.

2. Fil selon la revendication 1, caractérisé en ce qu'au moins un des éléments filiformes constituant le coeur est constitué d'une matière organique ou minérale, synthétique ou naturelle éliminable par dissolution, fusion ou combustion.

3. Fil selon l'une des revendications 1 ou 2, caractérisé en ce qu'au moins un des éléments filiformes constituant le coeur est constitué d'une matière inerte dans les conditions d'utilisation dudit fil.

4. Fil selon l'une des revendications 1 à 3, caractérisé en ce que le coeur contient au moins un fil en métal ou alliage du groupe des platinoïdes identique ou différent de celui constituant le fil (20) enroulé en hélice.

5. Fil selon l'une des revendications 1 à 4, caractérisé en ce que l'enroulement en hélice comprend au moins un fil (20) en platine ou en alliage de platine.

6. Fil selon l'une des revendications 1 à 4, caractérisé en ce que l'enroulement en hélice comprend au moins un fil (20) en palladium ou en alliage de palladium.

7. Fil selon l'une des revendications 1 à 6, caractérisé en ce que l'enroulement en hélice est constitué de plusieurs fils parallèles dont au moins un est constitué d'un métal du groupe des platinoïdes ou d'un alliage d'un de ces métaux.

8. Fil selon l'une des revendications 1 à 7, caractérisé en ce que l'un au moins des fils constituant l'enroulement en hélice est de section circulaire.

9. Fil selon l'une des revendications 1 à 7, caractérisé en ce que l'un au moins des fils constituant l'enroulement en hélice est sous la forme d'un ruban obtenu en laminant un fil de section circulaire préalablement à la réalisation dudit enroulement.

10. Fil selon l'une des revendications 1 à 9, caractérisé en ce que sa masse par unité de longueur est comprise entre 1,5 et 5 fois, de préférence entre 1,8 et 3 fois la masse de fil linéaire utilisé dans sa construction.

11. Fil selon l'une des revendications 1 à 10, caractérisé en ce que la distance entre deux spires consécutives de l'enroulement hélicoïdal (20) est comprise entre 0,25 et 4 fois le diamètre du fil constituant ledit enroulement.

12. Assemblage de fils tel que toiles, tissus, tricots, feutres, caractérisé en ce qu'il est obtenu par des techniques de tissage, tricotage, couture, broderie, utilisant des fils selon l'une des revendications 1 à 11, le cas échéant après élimination d'au moins un des fils en constituant le coeur.

13. Assemblage selon la revendication 12, caractérisé en ce que ledit assemblage est obtenu par tricotage d'un fil selon l'une des revendications 1 à 11, le cas échéant après élimination d'au moins un des fils en constituant le coeur.

14. Assemblage selon la revendication 13, caractérisé en ce que ledit assemblage est obtenu par tricotage d'un fil selon l'une des revendications 1 à 11, le cas échéant après élimination d'au moins un des fils en constituant le coeur, et d'un fil linéaire destiné au renforcement du tricot.

15. Assemblage selon l'une des revendications 12 à 14, caractérisé en ce qu'il est obtenu par tricotage d'un fil linéaire constitué d'un métal du groupe des platinoïdes ou d'un alliage d'un tel métal ou d'un fil en matériau réfractaire et par insertion d'un fil selon l'une des revendications 1 à 11, le cas échéant après élimination d'au moins un des fils en constituant le coeur, entre les mailles dudit tricot.

16. Assemblage selon la revendication 12, caractérisé en ce que ledit assemblage est obtenu par tissage de fils selon l'une des revendications 1 à 11 , le cas échéant après élimination d'au moins un des fils en constituant le coeur.

17. Assemblage selon la revendication 16, caractérisé en ce que les fils selon l'une des revendications 1 à 11 ou les fils obtenus le cas échéant après élimination d'au moins un des fils en constituant le coeur, ne représentent qu'une partie des fils utilisés pour réaliser le tissage, les autres fils étant constitués de fils linéaires destinés à assurer le renforcement du produit tissé et constitués soit d'un métal du groupe des platinoïdes ou d'un alliage d'un tel métal soit d'un fil en matériau réfractaire.

18. Utilisation des assemblages de fils selon l'une des revendications 12 à 17 comme catalyseur ou comme dispositif destiné à capter, en vue de leur récupération, des particules de métaux précieux ou de leurs alliages émises lors de la mise en oeuvre de procédés chimiques utilisant lesdits métaux précieux ou leurs alliages comme catalyseur.

19. Utilisation selon la revendication 18, caractérisée en ce que le fil (20) enroulé en hélice est un fil en platine ou en alliage de platine et en ce que l'assemblage est utilisé comme catalyseur de la réaction d'oxydation de l'ammoniac en oxyde d'azote en vue de préparer de l'acide nitrique ou de la réaction de préparation de l'acide cyanhydrique.

20. Utilisation selon la revendication 18, caractérisée en ce que le fil (20) enroulé en hélice est un fil en palladium ou en alliage de palladium et en ce que l'assemblage est utilisé pour capter, en vue de leur récupération, les particules de platine provenant du catalyseur utilisé lors de la réaction d'oxydation de l'ammoniac en oxyde nitrique.

21. Catalyseur destiné à la réaction d'oxydation de l'ammoniac en oxyde d'azote en vue de la préparation de l'acide nitrique ou à la préparation de l'acide cyanhydrique, caractérisé en ce qu'il est obtenu par assemblage, tissage, tricotage de fils comprenant au moins un enroulement hélicoïdal d'un fil de platine ou d'un alliage de platine connu comme catalyseur de ladite réaction.

22. Dispositif destiné à la récupération de particules de métaux précieux ou de leurs alliages utilisés comme catalyseur de réaction chimique, en particulier, destiné à la récupération du platine, dans la réaction d'oxydation de l'ammoniac, caractérisé en ce qu'il est obtenu par assemblage, tissage, tricotage de fils comprenant au moins un enroulement hélicoïdal d'un fil de palladium ou d'un de ses alliages.

**Patentansprüche**

1. Faden bzw. Draht, der mindestens ein helixartig (wendelförmig) darum herumgewickeltes Fadenelement aufweist, dadurch gekennzeichnet, daß er besteht aus einem Kern oder einer Seele, der (die) aus mindestens einem fadenförmigen Element(10, 11, 12) gebildet ist, um das herum mindestens ein fadenförmiges Element (20) helixartig (wendelförmig) herumgewickelt ist, das aus einem Metall aus der Gruppe der Platinmetalle oder einer Legierung eines dieser Metalle besteht.

2. Faden bzw. Draht nach Anspruch 1, dadurch gekennzeichnet, daß mindestens eines der fadenförmigen Elemente, die den Kern (die Seele) aufbauen, aus einem organischen oder mineralischen, synthetischen oder natürlichen, durch Auflösen, Schmelzen oder Verbrennen eliminierbaren Material besteht.

3. Faden bzw. Draht nach einem der Ansprüche 1 oder 2, dadurch gekennzeichnet, daß mindestens eines der fadenförmigen Elemente, die den Kern (die Seele) aufbauen, aus einem unter den Verwendungsbedingungen des genannten Fadens bzw. Drahtes inerten Material besteht.

4. Faden bzw. Draht nach einem der Ansprüche 1 bis 3, dadurch gekennzeichnet, daß der Kern (die Seele) mindestens einen Faden bzw. Draht aus einem Metall oder einer Legierung eines Metallens aus der Gruppe der Platinmetalle enthält, der identisch mit oder verschieden ist von demjenigen, der den helixartig (wendelförmig) darum herumgewickelten Faden bzw. Draht (20) aufbaut.

5. Faden bzw. Draht nach einem der Ansprüche 1 bis 4, dadurch gekennzeichnet, daß die helixartige Umwicklung mindestens einen Faden bzw. Draht (20) aus Platin oder einer Platin-Legierung umfaßt.

6. Faden bzw. Draht nach einem der Ansprüche 1 bis 4, dadurch gekennzeichnet, daß die helixartige Umwicklung mindestens einen Faden bzw. Draht (20) aus Palladium oder einer Palladium-Legierung umfaßt.

7. Faden bzw. Draht nach einem der Ansprüche 1 bis 6, dadurch gekennzeichnet, daß die helixartige Umwicklung aus mehreren parallelen Fäden bzw. Drähten besteht, von denen mindestens einer aus einem Metall aus der Gruppe der Platinmetalle oder einer Legierung eines dieser Metalle besteht.

**8.** Faden bzw. Draht nach einem der Ansprüche 1 bis 7, dadurch gekennzeichnet, daß mindestens einer der Fäden bzw. Drähte, welche die helixartige Umwicklung aufbauen, einen kreisförmigen Querschnitt hat.

**9.** Faden bzw. Draht nach einem der Ansprüche 1 bis 7, dadurch gekennzeichnet, daß mindestens einer der Fäden bzw. Drähte, welche die helixartige Umwicklung aufbauen, in Form eines Bandes vorliegt, das erhalten wurde durch vorheriges Auswalzen eines Fadens bzw. Drahtes mit kreisförmigem Querschnitt vor der Herstellung der Umwicklung.

**10.** Faden bzw. Draht nach einem der Ansprüche 1 bis 9, dadurch gekennzeichnet, daß seine Masse pro Einheitslänge zwischen dem 1,5-fachen und dem 5-fachen, vorzugsweise zwischen dem 1,8-fachen und dem 3-fachen, der Masse des zu seinem Aufbau verwendeten linearen Fadens bzw. Drahtes liegt.

**11.** Faden bzw. Draht nach einem der Ansprüche 1 bis 10, dadurch gekennzeichnet, daß der Abstand zwischen zwei aufeinanderfolgenden Spiralen (Windungen) der helixartigen Umwicklung (20) zwischen dem 0,25-fachen und dem 4-fachen des Durchmessers des die genannte Umwicklung aufbauenden Fadens bzw. Drahtes liegt.

**12.** Anordnung (Verband) von Fäden bzw. Drähten beispielsweise in Form von Stoffen, Geweben, Gewirken und Filzen, dadurch gekennzeichnet, daß sie (er) erhalten wurde durch Web-, Strick-, Näh- und Stickverfahren unter Verwendung von Fäden bzw. Drähten nach einem der Ansprüche 1 bis 11, gegebenenfalls nach Eliminierung mindestens eines der Fäden bzw. Drähte, die den Kern (die Seele) aufbauen.

**13.** Anordnung (Verband) nach Anspruch 12, dadurch gekennzeichnet, daß die (der) genannte Anordnung (Verband) erhalten wurde durch Verwirken eines Fadens bzw. Drahtes nach einem der Ansprüche 1 bis 11, gegebenenfalls nach Eliminierung mindestens eines der Fäden bzw. Drähte, die den Kern (die Seele) aufbauen.

**14.** Anordnung (Verband) nach Anspruch 13, dadurch gekennzeichnet, daß die (der) genannte Anordnung (Verband) erhalten wurde durch Verwirken eines Fadens bzw. Drahtes nach einem der Ansprüche 1 bis 11, gegebenenfalls nach Eliminierung mindestens eines der Fäden bzw. Drähte, die den Kern (die Seele) aufbauen, und eines linearen Fadens bzw. Drahtes, der als Verstärkung des Gewirkes dient.

**15.** Anordnung (Verband) nach einem der Ansprüche 12 bis 14, dadurch gekennzeichnet, daß sie (er) erhalten wurde durch Verwirken eines linearen Fadens bzw. Drahtes, der aus einem Metall aus der Gruppe der Platinmetalle oder einer Legierung eines solchen Metalls oder aus einem Faden aus einem schwerschmelzbaren Material besteht, und Einführen eines Fadens bzw. Drahtes nach einem der Ansprüche 1 bis 11, gegebenenfalls nach Eliminierung mindestens eines der Fäden bzw. Drähte, die den Kern (die Seele) aufbauen, zwischen die Maschen des genannten Gewirkes (Trikots).

**16.** Anordnung (Verband) nach Anspruch 12, dadurch gekennzeichnet, daß die (der) genannte Anordnung (Verband) erhalten wurde durch Verweben von Fäden bzw. Drähten nach einem der Ansprüche 1 bis 11, gegebenenfalls nach Eliminierung mindestens eines der Fäden bzw. Drähte, die den Kern (die Seele) aufbauen.

**17.** Anordnung (Verband) nach Anspruch 16, dadurch gekennzeichnet, daß die Fäden bzw. Drähte nach einem der Ansprüche 1 bis 11 oder die Fäden bzw. Drähte, die gegebenenfalls nach Eliminierung mindestens eines der Fäden bzw. Drähte, die den Kern (die Seele) aufbauen, erhalten wurden, nur einen Teil der zur Herstellung des Gewebes verwendeten Fäden bzw. Drähte darstellen, wobei die anderen Fäden bzw. Drähte lineare Fäden bzw. Drähte sind, die dazu dienen, eine Verstärkung des gewebten Produkts zu gewährleisten, und die bestehen entweder aus einem Metall aus der Gruppe der Platinmetalle oder aus einer Legierung eines solchen Metalls oder aus einem Faden aus einem schwerschmelzbaren Material.

**18.** Verwendung der Anordnungen (Verbände) von Fäden bzw. Drähten nach einem der Ansprüche 12 bis 17 als Katalysator oder als Einrichtung zum Einfangen von Teilchen von Edelmetallen oder Teilchen ihrer Legierungen, die bei der Durchführung von chemischen Verfahren, in denen die genannten Edelmetalle oder ihre Legierungen als Katalysator verwendet werden, emittiert werden, um sie zurückzugewinnen.

**19.** Verwendung nach Anspruch 18, dadurch gekennzeichnet, daß der helixartig herumgewickelte Faden bzw. Draht (20) ein Faden bzw. Draht aus Platin oder einer Platin-Legierung ist und daß die Anordnung (der Verband) als Katalysator bei der Reaktion der Oxidation von Ammoniak zu Stickstoffoxid zur Herstellung von Salpetersäure oder bei der Reaktion zur Herstellung von Cyanwasserstoffsäure verwendet wird.

20. Verwendung nach Anspruch 18, dadurch gekennzeichnet, daß der helixartig herumgewickelte Faden bzw. Draht (20) ein Faden bzw. Draht aus Palladium oder aus einer Palladium-Legierung ist und daß die Anordnung (der Verband) zum Einfangen der Platin-Teilchen verwendet wird, die aus dem bei der Reaktion der Oxidation von Ammoniak zu Salpetersäure verwendeten Katalysator stammen, um sie zurückzugewinnen.

21. Katalysator für die Reaktion der Oxidation von Ammoniak zu Stickstoffoxid zur Herstellung von Salpetersäure oder zur Herstellung von Cyanwasserstoffsäure, dadurch gekennzeichnet, daß er erhalten wird durch Vereinigen, Verwirken oder Verstricken von Fäden, die mindestens eine helixartige Umwicklung aus einem Faden aus Platin oder einer Platin-Legierung, die bekannt ist als Katalysator für die genannte Reaktion, aufweisen.

22. Vorrichtung zur Rückgewinnung der Teilchen aus Edelmetall oder ihren Legierungen, die als Katalysator für eine chemische Reaktion verwendet werden, insbesondere zur Rückgewinnung von Platin bei der Oxidationsreaktion von Ammoniak, dadurch gekennzeichnet, daß sie erhalten wird durch Vereinigen (Zusammenlegen), Verweben oder Verwirken von Fäden bzw. Drähten, die mindestens eine helixartige Umwicklung aus einem Faden bzw. Draht aus Palladium oder einer seiner Legierungen aufweisen.

**Claims**

1. A thread comprising at least one helically wound filiform element, characterized in that it is constituted by a core formed by at least one filiform element (10, 11, 12) around which is helically wound at least one filiform element (20) constituted by a metal of the platinoid group or by an alloy of one of these metals.

2. Thread according to claim 1, characterized in that at least one of the filiform elements constituting the core is constituted by an organic or inorganic, synthetic or natural matter able to be removed by dissolution, melting or combustion.

3. Thread according to one of claims 1 or 2, characterized in that at least one of the filiform elements constituting the core is constituted by a matter which is inert under the conditions of use of said thread.

4. Thread according to one of claims 1 to 3, characterized in that the core contains at least one thread of metal or alloy of the platinoid group identical to or different from the one constituting the helically wound thread (20).

5. Thread according to one of claims 1 to 4, characterized in that the helical winding comprises at least one thread (20) of platinum or a platinum alloy.

6. Thread according to one of claims 1 to 4, characterized in that the helical winding comprises at least one thread (20) of palladium or a palladium alloy.

7. Thread according to one of claims 1 to 6, characterized in that the helical winding is constituted by a plurality of parallel threads of which at least one is constituted by a metal of the platinoid group or of an alloy of one of these metals.

8. Thread according to one of claims 1 to 7, characterized in that at least one of the threads constituting the helical winding is of circular cross section.

9. Thread according to one of claims 1 to 7, characterized in that at least one of the threads constituting the helical winding is in the form of a tape obtained by rolling a thread of circular cross section prior to making said winding.

10. Thread according to one of claims 1 to 9, characterized in that its mass per unit length is included between 1.5 and 5 times, and preferably between 1.8 and 3 times, the mass of the linear thread used in its construction.

11. Thread according to one of claims 1 to 10, characterized in that the distance between two consecutive turns of the helical winding (20) is included between 0.25 and 4 times the diameter of the thread constituting said winding.

12. Assembling of threads such as cloths, fabrics, knits, felts, characterized in that it is obtained by techniques of weaving, knitting, sewing, embroidery, using threads according to one of claims 1 to 11, optionally after the removal of at least one of the threads constituting the core.

13. Assembling according to claim 12, characterized in that said assembling is obtained by knitting a thread according to one of claims 1 to 11, optionally after the removal of at least one of the threads constituting the core.

14. Assembling according to claim 13, characterized in that said assembling is obtained by knitting a thread according to one of claims 1 to 11, optionally after the removal of at least one of the threads constituting the core, and a linear thread intended for reinforcing the knit.

15. Assembling according to one of claims 12 to 14, characterized in that it is obtained by knitting a linear thread constituted by a metal of the platinoid group or by an alloy of such a metal or by a thread of refractory material and by insertion of a thread according to one of claims 1 to 11, optionally after the removal of at least one of the threads constituting the core, between the stitches of said knit.

16. Assembling according to claim 12, characterized in that said assembling is obtained by weaving threads according to one of claims 1 to 11, optionally after the removal of at least one of the threads constituting the core.

17. Assembling according to claim 16, characterized in that the threads according to one of claims 1 to 11 or the threads obtained optionally after the removal of at least one of the threads constituting the core, represent only a part of the threads used for making the weave, the other threads being constituted by linear threads intended to ensure the reinforcement of the woven product and constituted either by a metal of the group of platinoids or an alloy of such a metal, or by a thread of refractory material.

18. Use of the assemblings of threads according to one of claims 12 to 17 as catalyst or as device for collecting, with a view of recovery thereof, the particles of precious metals or their alloys emitted during the execution of the chemical processes using said precious metals or their alloys as catalyst.

19. Use according to claim 18, characterized in that the helically wound thread (20) is a thread of platinum or platinum alloy and in that the assembling is used as catalyst of the reaction of oxidation of ammonia into nitric oxide with a view of preparing nitric acid or of the reaction of preparation of hydrocyanic acid.

20. Use according to claim 18, characterized in that the helically wound thread (20) is a thread of palladium or palladium alloy and in that the assembling is used for collecting, with a view of recovery thereof, the particles of platinum coming from the catalyst used during the reaction of oxidation of ammonia into nitric oxide.

21. Catalyst intended for the reaction of oxidation of ammonia into nitric oxide with a view of preparing nitric acid or the preparation of hydrocyanic acid, characterized in that it is obtained by assembling, weaving, knitting threads comprising at least one helical winding of a thread of platinum or a platinum alloy known as catalyst of said reaction.

22. Device for recovering particles of precious metals or alloys thereof used as catalyst of chemical reaction, in particular intended for recovering the platinum, in the reaction of oxidation of ammonia, characterized in that it is obtained by assembling, weaving, knitting threads comprising at least one helical winding of a thread of palladium or of one of its alloys.

FIG.1

FIG. 2

FIG.3

FIG.4

EP 0 652 985 B1

FIG.5

EP 0 652 985 B1

FIG.6

FIG.7

FIG. 8